# EUROPEAN PATENT SPECIFICATION

(11) **EP 2 337 455 B1**
(45) Date of publication and mention of the grant of the patent: **22.10.2014**
(21) Application number: 08875387.6
(22) Date of filing: 28.11.2008
(51) Int. Cl.: A21C 9/04

(54) **AUTOMATIC APPARATUS FOR DEPOSITING SAUCE ONTO PIZZA BASES OR FOODSTUFFS**
AUTOMATISCHE VORRICHTUNG ZUM AUFTRAGEN VON SAUCE AUF PIZZABÖDEN ODER LEBENSMITTEL
APPAREIL AUTOMATIQUE POUR DÉPOSER UNE SAUCE SUR DES BASES DE PIZZA OU DES ALIMENTS

(30) Priority: 22.10.2008 ES 200802977
(43) Date of publication of application: 29.06.2011
(73) Proprietor: Vallortigara, Omar, 08504 Sant Julià De Vilatorta (Barcelona) (ES); Aguilar Bueno, Judit, 08504 Sant Julià De Vilatorta (Barcelona) (ES)
(72) Inventor: VALLORTIGARA, Omar, 08504 Sant Julià De Vilatorta (Barcelona) (ES)
(74) Representative: Gallego Jiménez, José Fernando
(86) International application number: PCT/EP2008/066414
(87) International publication number: WO 2010/045988

(56) References cited:
- EP-A- 0 293 671
- EP-A- 1 428 435
- DE-A1- 19 629 984
- GB-A- 1 149 308
- US-A- 3 547 052
- US-A- 4 771 726
- US-E- R E36 178

## Description

### Technical Field

The present invention relates generally to an automatic apparatus for depositing sauce onto pizza bases or foodstuffs, and more specifically to an automatic apparatus provided with a shower-like dispenser head which is able to deposit sauce, such as tomato sauce, onto stationary or moving pizza bases or foodstuffs that are carried on a conveyor device.

### Background of the invention

Automatic devices for depositing sauce onto pizza bases or foodstuffs are known from the state of the art. When one wants to deposit sauce onto moving pizza bases or foodstuffs that are carried on a conveyor device it is convenient that the apparatus can avoid the sauce being spilled outside the pizza base or foodstuff and on the conveyor device, as this means a waste of sauce and results in dirtiness of the conveyor device.

GB-A-2298776 discloses an apparatus for depositing sauce onto moving pizza bases while they are transported on a conveyor device. The apparatus includes a curtain-like dispenser head consisting of a sauce supply conduit transversally situated above the conveyor device, and a plurality of sauce dispensing nozzles arranged side by side to one another, forming a row alongside the supply conduit and in communication with it. Each nozzle is associated to a valve device comprising a plunger that is individually operated by pneumatic means in order to open or close the sauce passage from the supply conduit towards an inlet of the nozzle. The valve devices of the several nozzles are controlled by electronic control means that are synchronised with the advance movement of the pizza bases above the conveyor device so that they are individually opened and closed for depositing ejected sauce portions in parallel lines onto the pizza bases. The plunger of each valve device can be withdrawn after the ejection of a portion of a sauce dose in order to create a suction effect in the nozzle to stop the ejection of sauce from the nozzle in a quick and precise way. This apparatus has several drawbacks. On one hand, the device has a complex construction due to the large number of valves individually operated and controlled. On the other hand, it is difficult to assure an even distribution of the sauce along the outlet and through the several nozzles due to the relatively high viscosity of the sauce.

US RE 36178 E describes an apparatus for depositing a precise quantity of sauce onto a pizza base. The apparatus comprises a shower-like dispenser head that includes a body defining a sauce chamber. The mentioned body has a generally circular lower plate that can be set facing a pizza base and through which a plurality of sauce dispensing nozzles in communication with said chamber are arranged. The apparatus includes a dosing device configured and arranged to receive sauce from a sauce tank and to inject successive sauce doses to the chamber, so that each one of the injected doses is ejected as multiple portions through said nozzles and deposited onto one of the successive pizza bases being carried on a conveyor device. A diffuser plate provided with multiple bores is suspended inside the chamber to force the sauce from the dosing device to pass around and through the diffuser plate towards the nozzles in order to facilitate the most even possible distribution and diffusion of the sauce throughout the chamber. One drawback of this apparatus is that it does not comprise means to stop the sauce ejection though the nozzles in a quick and precise way at the end of each dosing process, which may result in imprecision in the dosage, difficulties in the synchronisation between the dispenser head and the conveyor device, and the risk of dropping sauce outside the pizza bases and on the conveyor device.

WO 00/00034 discloses an apparatus for depositing and spreading sauce on a pizza base, which includes a dispenser head comprising a body defining a sauce chamber. The mentioned body has a generally circular lower plate that can be set facing a pizza base, and through said lower plate a plurality of sauce dispensing nozzles in communication with said chamber are arranged. The apparatus includes a dosing device configured and arranged to receive sauce from a sauce tank and to inject successive sauce doses to the chamber to be deposited in the form of multiple portions ejected through said nozzles to successive pizza bases. The dispenser head further includes a porous plate situated below the lower plate forming an air chamber between them, and the sauce dispensing nozzles are arranged through the air chamber and corresponding openings in the porous plate. The air chamber has an inlet though which compressed air is introduced, and the compressed air is emitted through the pores of the porous plate to spread the ejected portions of sauce onto the pizza base. This process of depositing and spreading sauce requires a set amount of time, which is why depositing and spreading operations are carried out onto stationary pizza bases. Accordingly, this document does not meet the speed and accuracy requirements for depositing sauce onto moving pizza bases.

EP 1428435 discloses an apparatus for repeated application of a food product such a sauce onto pizza bases or foodstuffs having a container arranged to receive through a supply line sauce pumped from a sauce tank, said container being provided with openings in a base plate thereof for dispensing the product, said openings being closable by means of a piston operated superimposed slider for pressure build-up in the container, the slider having openings that correspond with the openings of the base plate in an open position of the slider and the apparatus having axially displaceable pins which may be pushed into the openings while the slider is in the open position.

US RE36178 describes an apparatus for dispensing a quantity of flowable material such as a viscous food material, including an air actuated reciprocating pump arranged to inject flowable material into a dispensing manifold chamber in successive doses.

### Summary of the invention

One objective of the present invention is to provide an automatic apparatus for depositing sauce onto pizza bases or foodstuffs, which has a shower-like dispenser head that is able to evenly eject successive doses of sauce, each one in the form of multiple ejected portions, in a quick, precise and reliable way, so that the dispenser head is able to deposit sauce in a uniform pattern onto either stationary or moving pizza bases or foodstuffs, which are generally carried on a conveyor device.

The present invention contributes to achieve the previous and other objectives by providing an automatic apparatus for depositing sauce onto pizza bases or foodstuffs, of the type including at least a dispenser head comprising a body that defines a sauce chamber, said body having a lower plate that can be set facing a pizza base or foodstuff and a plurality of sauce dispensing nozzles arranged through said lower plate and in communication with said chamber, and a dosing device configured and arranged to receive sauce from a sauce tank and inject sauce into the chamber in successive doses to be ejected through said nozzles and deposited onto successive pizza bases or foodstuffs. The apparatus further includes a dividing plate for the purpose of dividing said chamber into an upper chamber region and a lower chamber region that are communicated by a plurality of through holes formed in said dividing plate, wherein said dosing device is arranged to dose sauce to said upper chamber region, and actuation means configured and arranged to impart a reciprocating movement to said dividing plate with respect to the body, or vice versa, between a first relative position, where the upper chamber region has an increased volume and said lower chamber region has a decreased volume, and a second relative position, where the upper chamber region has a decreased volume and the lower chamber region has an increased volume. Each one of said plurality of sauce dispensing nozzles includes a tubular element with an inner conduit, a lower portion inserted in a corresponding through hole formed in the lower plate of the chamber body, an outlet of said inner conduit at the end of said lower portion, and at least an inlet to the inner conduit arranged to be alternately closed and opened in communication with the lower chamber region as a result of said to-and-fro relative movement between the dividing plate and the body.

It is very important for the good operation of the head that no air pockets mixed within the sauce are present inside the chamber. To this end, the apparatus includes a purging device arranged in connexion to the upper chamber region to purge any air contained in the chamber when the chamber is first filled, or at any time considered to be necessary.

In one specific embodiment, each tubular element has a closed upper end attached to the dividing plate so that the tubular element moves therewith, while said lower portion is slidingly inserted into said through hole in the lower plate. In this case, the inlet of the tubular element is a lateral opening located in such a position as to be alternately closed by a wall of the through hole, when the body and the dividing plate are in said first relative position, and opened in communication with the lower chamber region when the body and the dividing plate are in said second relative position. According to an alternative embodiment, the lower portion of the tubular element is inserted and attached to the through hole in the lower plate, and, as a result, the tubular element moves therewith, while the tubular element has an upper portion slidingly inserted into a through hole in the dividing plate. The inlet of the inner conduit of the tubular element is a lateral opening located near a blind end of said upper portion of the tubular element in such a position that it is alternately closed by a wall of said through hole in the dividing plate when the body and the dividing plate are in said first relative position, and opened in communication with the lower chamber region when the body and the dividing plate are in said second relative position.

In any case, the inlets for accessing the inner conduit of the tubular elements are alternately opened to allow the passage of a sauce dose in the form of multiple portions that are ejected through the corresponding delivery openings, and closed to cease the ejection of the sauce dose. The apparatus includes electronic control means connected to the dosing device and to the actuation means for imparting the relative movements to carry out the injection of each dose of sauce to the upper chamber region while the inlet of the tubular element is, at least, partially opened. Preferably, said electronic control means are designed to carry out the injection of each sauce dose to the upper chamber region during the relative movement between the body and the dividing plate from the first relative position to the second relative position. The relative movements between the dividing plate and the body of the chamber result in an alternated sauce pumping effect in opposite directions between the upper and lower chamber regions though the through holes formed in said dividing plate, which makes the ejection quicker and its starting and stopping more accurate. Furthermore, the position of the inlet for acceding the inner conduit of each tubular element in relation to an upper port of the through hole of the lower plate or in relationship with a lower port of the through hole on the upper plate (depending on the embodiment) is such that, during the transition from the first relative position to the second relative position, and during the injection of the next sauce dose, a suction effect in the inner conduit of the tubular element though the inlet takes place. This suction effect makes the ejection stop even more sudden and accurate and avoids any sauce remaining inside the inner conduit of the tubular element dripping outside the pizza base or foodstuff and onto the conveyor device.

The speed and accuracy in the ejection of each sauce dose allows for the apparatus of the present invention to deposit sauce onto moving pizza bases or foodstuffs. To this end, the lower plate of the body is arranged over the trajectory of a row of pizza bases or foodstuffs that are continuously carried forward by a conveyor device, and the electronic control means are also in connexion with said conveyor device. The electronic control means are configured to dispense successive sauce doses in the form of multiple portions ejected from said dispenser head in advance with respect to the advance of the pizza bases or foodstuffs in order to make each sauce dose to be released and deposited in a predetermined position onto one of the pizza bases or foodstuffs. The apparatus of the present invention is obviously also suitable for use with a conveyor device which carries the pizza bases or foodstuffs forwards with intermittent stopping, in which case the ejection occurs when a pizza base or foodstuff stops under the dispenser head. Alternatively, the head can be installed on a movable part of a structure base operated to move back and forth in the direction of the movement of the conveyor device, and the ejection, at least partially, occurs during a time period in which the head movement follows the translation of a pizza base or foodstuff continuously carried forward by the conveyor device.

### Brief Description of the Drawings

The previous and other features and advantages of the invention will be better understood from the following detailed description of some exemplary embodiments with reference to the enclosed drawings, where:
Fig. 1 is a cross-sectional schematic view of an automatic apparatus for depositing sauce onto pizza bases or foodstuffs according to an embodiment of the present invention;
Fig. 1A is a lower view of a dispenser head as part of the apparatus of Fig. 1;
Fig. 2 is a cross-sectional schematic view of the head showing a chamber body and a dividing plate in a first relative position;
Fig. 3 is a cross-sectional schematic view of the head showing the chamber body and the dividing plate in a second relative position;
Figs. 4 and 5 are enlarged detailed views showing the actuation of a tubular element according to one embodiment when the chamber body and the dividing plate are in said first and second relative positions, respectively; and
Figs. 6 and 7 are enlarged details showing the actuation of a tubular element according to another alternative embodiment when the chamber body and the dividing plate are in said first and second relative positions, respectively.

### Detailed description of exemplary embodiments

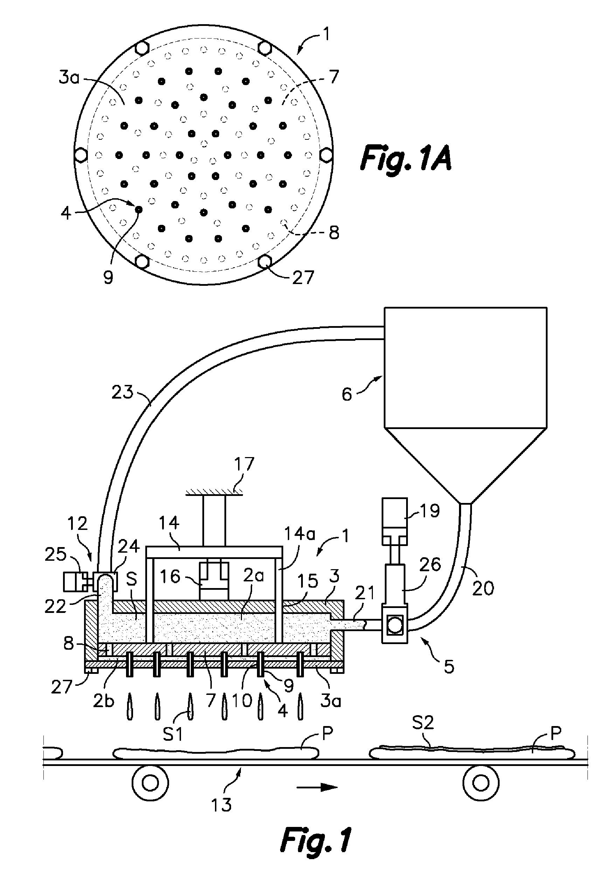

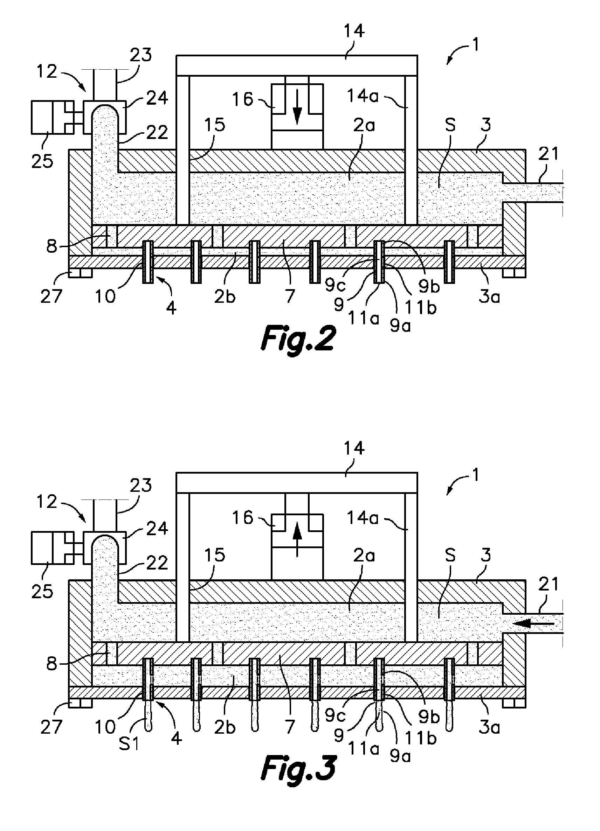

With reference first to Fig. 1, the automatic apparatus for depositing sauce onto pizza bases or foodstuffs includes, according to one embodiment, a dispenser head 1, comprising a body 3 defining a chamber 2a, 2b for sauce S. said body 3 has a lower plate 3a positioned over the trajectory of a row of pizza bases or foodstuffs P that are carried forward on a conveyor device 13. Inside the aforementioned chamber 2a, 2b there is a dividing plate 7 dividing the chamber 2a, 2b into an upper chamber region 2a and a lower chamber region 2b, which are mutually communicated by a plurality of through holes 8 formed in said dividing plate 7. The dividing plate 7 is connected to a support 14 situated outside the chamber 2a, 2b by means of columns 14a inserted in a sliding manner through corresponding openings 15 formed in the upper wall of the body 3. Actuation means, such as, for example, a linear actuator 16, are arranged with their movable parts connected respectively to the body 3 and to said support 14 to impart a reciprocating relative movement between the dividing plate 7 and the body 3. This reciprocating movement is carried out between a first relative position (shown in Figs. 1 and 2), where the upper chamber region 2a has an increased volume and the lower chamber region 2b has a decreased volume, and a second relative position (shown in Fig. 3), where the upper chamber region 2a has a decreased volume and the lower chamber region 2b has an increased volume. A plurality of sauce dispensing nozzles 4 which are put in communication with the lower chamber region 2b at intervals as a result of the reciprocating relative movement are arranged through said lower plate 3a, as will be explained in more detail below.

The apparatus further includes a dosing device 5, such as, for example, a volumetric dosing device 26 operated by a linear actuator 19, which is configured and arranged in order to receive sauce S from a sauce tank 6 through a feeding pipe 20, and inject sauce S in successive doses to the upper chamber region 2a through an inlet conduit 21. The apparatus includes electronic control means, which are in connection with the dosing device 5 and with the actuation means to carry out the injection of each sauce dose S to the upper chamber region 2a while the nozzles 4 are, at least partially, opened in communication with the lower chamber region 2b. Thus, each sauce dose S that is injected into the upper chamber region 2a by the dosing device 5 goes to the lower chamber region 2b through the through holes 8 in the dividing plate 7 and is ejected in the form of multiple portions S1 through the nozzles 4 and deposited onto one of the successive pizza bases or foodstuffs P, which are on the conveyor device 13. To eliminate any air pockets mixed with the sauce inside the chamber 2a, 2b, the apparatus includes a purging device 12, such as for example a valve 24 operated by an actuator 25, arranged in connexion with the upper chamber region 2a through an outlet conduit 22 to purge the air contained in the chamber 2a, 2b at the time the chamber 2a, 2b is initially filled or as considered necessary. The purging device 12 is in connection with the sauce tank 6 trough a return duct 23. During the normal operation of the apparatus, the valve 24 of the purging device 12 is closed.

In Fig. 1A a possible distribution of the nozzles 4 across the lower plate 3a and of the through holes 8 across the dividing plate 7 is shown. The shape of the head 1 is generally circular in accordance with the size of the pizza base to be coated with sauce, although for other foodstuffs the shape of the head may vary. The density of the nozzles 4 and of the through holes 8 will be selected as a general rule in function of the viscosity of the sauce and of the size of the dose. When the ejected sauce portions S1 impacts against the upper surface of the pizza base or foodstuff P they spread out to some extent forming spread out sauce portions S2. Depending on the density of nozzles 4 on the lower plate 3a and the viscosity of the sauce S, the spread out sauce portions S2 can remain isolated on the surface of the pizza base or foodstuff P or can merge together to form a substantially even sauce coating. The lower plate 3a can be attached to the rest of the body 3 by means of, for example, screws 27 and sealing joints can be provided where considered necessary. Although in the figures the lower plate as well as the rest of the body 3 are shown as being each one-piece part, it is also contemplated for each to be made up of several parts.

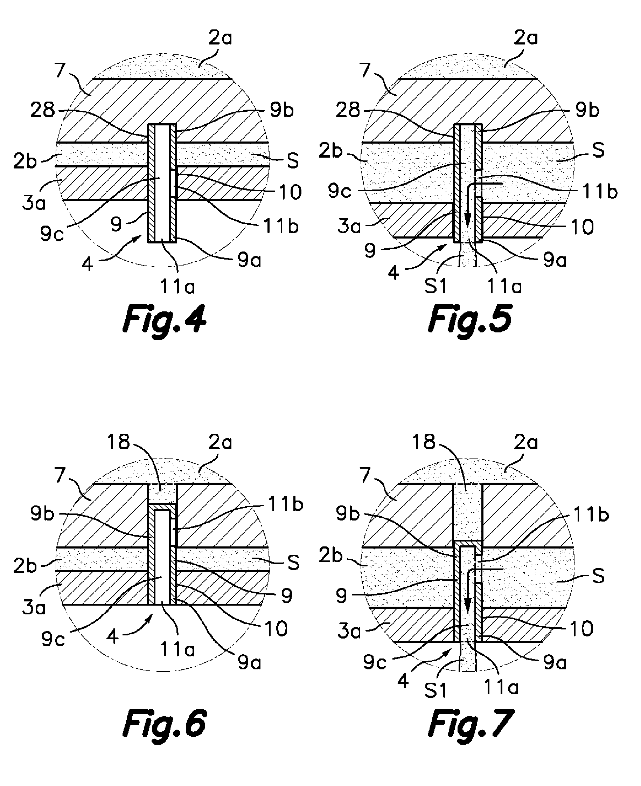

The operation of the dispenser head 1 is described now with reference to Figs. 2 and 3, with the actuation and constitution of the nozzles 4 being shown in greater detail in Figs. 4 and 5. In the embodiment shown in Figs. 1 to 5, each one of the sauce dispensing nozzles 4 includes a tubular element 9 that has a lower portion 9a inserted in a sliding manner in a corresponding through hole 10 in the lower plate 3a, and an upper portion 9b with an end attached to the dividing plate 7, for example by a threaded coupling in a corresponding blind hole 28 formed in the dividing plate 7 (Figs. 4 and 5). The tubular element 9 also has an inner conduit 9c, an outlet 11 a of said inner conduit 9c at the end of said lower portion 9a, and an inlet 11 b to the inner conduit 9c in the form of a lateral opening. The access to the inner conduit 9c at the end of the upper portion 9b of the tubular element 9 is closed off by the blind hole 28 in the dividing plate 7. The aforementioned inlet 11 b is in such a position that it is alternately closed by a wall of the through hole 10 in the lower plate 3a when the body 3 and the dividing plate 7 are in said first relative position (Figs. 2 and 4) and opened in communication with the lower chamber region 2b when the body 3 and the dividing plate 7 are in said second relative position (Figs. 3 and 5).

A complete cycle of a sauce dose S dispensation involves, for example, starting at the first relative position (Fig. 2), switching to the second relative position (Fig. 3) and returning to the first relative position (Fig. 2). In a time period during the cycle, while the inlets 11 b to the inner conduits 9c of the tubular elements 9 forming the nozzles 4 are opened, the dosing device 5 injects a sauce dose S that is ejected in the form of portions S1 through the outlets 11 b of the nozzles 4. The injection of the sauce dose S can be carried out while the body 3 and the dividing plate 7 are stopped in the second relative position (Fig. 3), or during the transition between the first and second relative positions, where the inlets 11 b are gradually opening, or during the transition between the first and second relative positions, where the inlets 11 b are gradually closing, or a combination of the first possibility with any of the second ones. Preferably, the electronic control means are configured to carry out the injection of each sauce dose S to the upper chamber region 2a during the relative movement between the body 3 and the dividing plate 7 from the first relative position to the second relative position. On the other hand, the positioning of the inlet 11 b of each nozzle 4 in relation to the upper port of said through hole 10 in the lower plate 3a is such that, during the transition from the first relative position to the second relative position, and at the start of the injection of the subsequent sauce dose S, a suction effect in the inner conduit 9c of the tubular element 9 is produced through the inlet 11 b, which stops the ejection of the previous sauce dose S in an sudden manner and prevents the sauce remaining in the inner conduit 9c of the tubular element 9 from dropping.

In Figs. 6 and 7 an alternative embodiment for the nozzles 4 is shown, according to which each nozzle 4 includes a tubular element 9 provided with an inner conduit 9c. Here the tubular element 9 has a lower portion 9a attached, for example by means of a threaded coupling, to a through hole 10 in the lower plate 3a and an upper portion 9b inserted in a sliding manner into a through hole 18 formed in the dividing plate 7. The tubular element 9 further has an outlet 11 a in the end of the lower portion 9a that opens to the exterior through the through hole 10 in the lower plate 3a and an inlet 11 b in the form of a lateral opening. One end of the upper portion 9b is blind in order to prevent access to the inner conduit 9c though the through hole 18 in the dividing plate 7. The inlet 11 b is in such a position that is alternately closed by a wall of said through hole 18 in the dividing plate 7, when the body 3 and the dividing plate 7 are in said first relative position (Fig. 6), and opened in communication with the lower chamber region 2b when the body 3 and the dividing plate 7 are in said second relative position (Fig. 7). With this alternative embodiment, the operation of the head 1 is similar to that previously described in relation to the embodiment shown in Figs. 1 to 5, and the aforementioned suction effect is also produced as a function of the position of the inlet 11 b in relation to the lower port of the through hole 18 in the dividing plate 7.

Referring back to Fig. 1, the apparatus of the present invention allows for an operative situation where the head 1 is supported on a base structure 17 with the lower plate 3a of the body 3 positioned above the trajectory of a row of pizza bases or foodstuffs P which are continuously moving forward along a conveyor device 13, and the electronic control means are also in connection with said conveyor device 13 to dispense successive sauce doses S in the form of multiple ejected portions S1 from the dispenser head 1 in a predetermined time in advance calculated so that each portion of sauce falls and is deposited onto one of the pizza bases or foodstuffs P in a predetermined position. Nevertheless, the apparatus of the present invention can also be used in other operative situations where the lower plate 3a of the body 3 of the head 1 is positioned above the trajectory of a row of pizza bases or foodstuffs P which are carried forwards with intermittent stop by the conveyor device 13. In this case, the electronic control means, which are further connected to the conveyor device 13, control the apparatus to dispense successive sauce dose S in the form of multiple ejected portions S1 from the dispenser head 1 in synchronism with the stops of the conveyor belt 13, so that each amount of sauce falls and is deposited onto one of the pizza bases or foodstuffs P in a predetermined position. It is also possible to equip the apparatus with means to make the head 1 move forward following the movement of the pizza bases or foodstuffs P during the ejection of the sauce dose and for make it to return to its original position before the next dispensing operation begins, or combinations of the previous possibilities.

It will be understood that, whatever the type of movement of the conveyor device is, it can be adapted to carry several parallel rows of pizza bases or foodstuffs P, in which case several heads 1, similar to the one described above, will be supported in the base structure 17, each one having its lower plate 3a positioned above the trajectory of one of these parallel rows of pizza bases or foodstuffs P.

In the embodiment shown in Fig. 1, the previously mentioned support 14 is attached to the base structure 17 (only symbolically depicted) so that the body 3 with the lower plate 3a moves with respect to the base structure 17 while the dividing plate 7 and the tubular elements 9 are stationary during the reciprocating relative movement between the dividing plate 7 and the body 3. In this way, the distance between the end of the lower portions 9a of the tubular elements 9, where the respective outlets 11c of the nozzles 4 are, remains at a constant height in relation to the surface of the conveyor device on which the pizza bases or foodstuffs P rest, which facilitates the adjustment of the head so that it can deposit the sauce according to an even predetermined pattern. Otherwise, in an alternative embodiment (not shown), the body 3 and the lower plate 3a are attached to a base structure 17 so that the support 14 along with the dividing plate 7 and the tubular elements 9 move with respect to said base structure 17 while the body 3 and the lower plate 3a remain stationary during the reciprocating relative movement between the dividing plate 7 and the body 3.

Someone skilled in the art will be able to carry out modifications and variations from the exemplary embodiments shown and described without departing from the scope of the present invention as is defined in the appended claims.

## Claims

1. Automatic apparatus for depositing sauce onto pizza bases or foodstuffs, of the type comprising:
at least a dispenser head (1) comprising a body (3) defining a chamber (2a, 2b) for sauce (S), said body (3) having a lower plate (3a) able to be set facing a pizza base or foodstuff (P) and a plurality of sauce dispensing nozzles (4) arranged through said lower plate (3a) and in communication with said chamber (2a, 2b); and
a dosing device (5) configured and arranged to receive sauce (S) from a sauce tank (6) and inject sauce (S) in successive doses to the chamber to be ejected through said nozzles (4) and deposited onto successive pizza bases or foodstuffs (P),
a dividing plate (7) arranged to divide said chamber (2a, 2b) into an upper chamber region (2a) and a lower chamber region (2b) communicating by a plurality of through holes (8) in the dividing plate (7), said dosing device (5) being arranged to dose sauce (S) to said upper chamber region (2a),
actuation means configured and arranged to impart a reciprocating movement to said dividing plate (7) in relation to the body (3), or vice versa, between a first relative position, where the upper chamber region (2a) has an increased volume and said lower chamber region (2b) has a decreased volume, and a second relative position, where the upper chamber region (2a) has a decreased volume and the lower chamber region (2b) has an increased volume, such that the relative movements between the dividing plate (7) and the body of the chamber (2a, 2b) results in an alternating sauce pumping effect in opposite directions between the upper and lower chamber regions through the through holes (8) formed in said dividing plate,
and wherein each one of said plurality of sauce dispensing nozzles (4) comprises:
a tubular element (9) with an inner conduit (9c), said tubular element (9) having:
an upper portion (9b) with a closed end attached to the dividing plate (7);
a lower portion (9a) inserted in a sliding manner in a corresponding through hole (10) formed in the lower plate (3a) of the body (3);
an outlet (11 a) from said inner conduit (9c) at the end of said lower portion (9a); and
at least one inlet (11 b) to the inner conduit (9c) arranged to be alternately closed and opened in communication with the lower chamber region (2b) as a result of said reciprocating relative movement between the dividing plate (7) having attached said dispensing nozzles (4) and the body (3).

2. Device according to claim 1, **characterized in that** said inlet (11b) of the tubular element (9) being a lateral opening arranged in order to be alternately closed off by a wall of the through hole (10) when the body (3) and the dividing plate (7) are in said first relative position and opened in communication with the lower chamber region (2b) when the body (3) and the dividing plate (7) are in said second relative position.

3. Automatic apparatus for depositing sauce onto pizza bases or foodstuffs, of the type comprising:
at least a dispenser head (1) comprising a body (3) defining a chamber (2a, 2b) for sauce (S), said body (3) having a lower plate (3a) able to be set facing a pizza base or foodstuff (P) and a plurality of sauce dispensing nozzles (4) arranged through said lower plate (3a) and in communication with said chamber (2a, 2b); and
a dosing device (5) configured and arranged to receive sauce (S) from a sauce tank (6) and inject sauce (S) in successive doses to the chamber to be ejected through said nozzles (4) and deposited onto successive pizza bases or foodstuffs (P),
a dividing plate (7) arranged to divide said chamber (2a, 2b) into an upper chamber region (2a) and a lower chamber region (2b) communicating by a plurality of through holes (8) in the dividing plate (7), said dosing device (5) being arranged to dose sauce (S) to said upper chamber region (2a),
actuation means configured and arranged to impart a reciprocating movement to said dividing plate (7) in relation to the body (3), or vice versa, between a first relative position, where the upper chamber region (2a) has an increased volume and said lower chamber region (2b) has a decreased volume, and a second relative position, where the upper chamber region (2a) has a decreased volume and the lower chamber region (2b) has an increased volume, such that the relative movements between the dividing plate (7) and the body of the chamber (2a, 2b) results in an alternating sauce pumping effect in opposite directions between the upper and lower chamber regions through the through holes (8) formed in said dividing plate,
and wherein each one of said plurality of sauce dispensing nozzles (4) comprises:
a tubular element (9) with an inner conduit (9c), said tubular element (9) having:
a lower portion (9a) inserted in and attached to a corresponding through hole (10) formed in the lower plate (3a) of the body (3);
an outlet (11a) from said inner conduit (9c) at the end of said lower portion (9a);
an upper portion (9b) inserted in a sliding manner in a through hole (18) in the dividing plate (7), and
at least one inlet (11 b) to the inner conduit (9c) arranged to be alternately closed and opened in communication with the lower chamber region (2b) as a result of said reciprocating relative movement between the dividing plate (7) and the body (3),
said inlet (11 b) of the tubular element (9) being a lateral opening arranged near a blind end of said upper portion (9b) to be alternately closed off by a wall of said through hole (18) in the dividing plate (7) when the body (3) and the dividing plate (7) are in said first relative position and open in communication with the lower chamber region (2b) when the body (3) and the dividing plate (7) are in said second relative position.

4. Device according to claim 2 or 3, **characterized in that** electronic control means are in connection with the dosing device (5) and said actuation means to carry out the injection of each sauce dose (S) to the upper chamber region (2a) while the inlet (11 b) of the tubular element (9) is at least partially open.

5. Device according to claim 4, **characterized in that** the position of the inlet (11 b) in relation to a port of said through hole (10) in the lower plate (3a) or said through hole (18) in the dividing plate (7) is such that, during the transition from the first relative position to the second relative position and during the injection of the next sauce dose, a suction effect is produced in the inner conduit (9c) of the tubular element (9) through said inlet (11 b).

6. Device according to claim 4, **characterized in that** said electronic control means are designed to carry out the injection of each sauce dose (S) into the upper chamber region (2a) during the relative movement between the body (3) and the dividing plate (7) from the first relative position to the second relative position.

7. Device according to claim 4, **characterized in that** the lower plate (3a) of the body (3) is positioned above the trajectory of a row of pizza bases or foodstuffs (P), which are carried forward continuously on a conveyor device (13), and **in that** said electronic control means are also connected to said conveyor device (13) to dispense successive sauce doses (S) in the form of multiple ejected portions (S1) from said dispenser head (1) with a suitable time in advance in order that each dose of sauce falls and is deposited onto one of the pizza bases or foodstuffs (P) in a predetermined position.

8. Device according to claim 4, **characterized in that** the lower plate (3a) of the body (3) is positioned above the trajectory of a row of pizza bases or foodstuffs (P), which are carried forwards with intermittent stops on a conveyor device (13), and **in that** said electronic control means are also connected to said conveyor device (13) to dispense successive sauce doses (S) in the form of multiple ejected portions (S1) from said dispenser head (1) in synchronism with the stops of said conveyor device (13) in order that each sauce dose falls and is deposited onto one of the pizza bases or foodstuffs (P) in a predetermined position.

9. Device, according to any of the preceding claims, **characterized in that** a purging device (12) is arranged in connection with the upper chamber region (2a) to purge any air contained in the chamber (2a, 2b) at the time the chamber (2a, 2b) is initially filled or when deemed necessary.

10. Device according to any of the preceding claims, **characterized in that** the dividing plate (7) is connected to a support (14) outside the chamber (2a, 2b) by means of at least one column (14a) inserted in a sliding manner through a corresponding opening (15) in the body (3), and at least one linear actuator (16) is arranged with its movable parts respectively connected to the body (3) and to said support (14) in order to impart said reciprocating relative movement between the dividing plate (7) and the body (3).

11. Device according to claim 10, **characterized in that** the support (14) is attached to a base structure (17) so that the body (3) and the lower plate (3a) move with respect to said base structure (17) while the dividing plate (7) and the tubular elements (9) remain stationary during the reciprocating relative movement between the dividing plate (7) and the body (3).

12. Device according to claim 10, **characterized in that** the body (3) together with the lower plate (3a) are attached to the base structure (17) so that the support (14) together with the dividing plate (7) and the tubular elements (9) move with respect to said base structure (17) while the body (3) and the lower plate (3a) remain stationary during the reciprocating relative movement between the dividing plate (7) and the body (3).

## Patentansprüche

1. Automatische Vorrichtung zum Aufbringen von Soße auf Pizzaböden oder Lebensmitteln, bestehend aus:
mindestens einem Verteilerkopf (1), bestehend aus einem Gehäuse (3), das eine Kammer (2a, 2b) für Sauce (S) bildet, wobei besagtes Gehäuse (3) eine untere Platte (3a) besitzt, die einem Pizzaboden oder Lebensmitteln (P) gegenüberliegend eingestellt werden kann, sowie einer Gruppe von Verteilerdüsen (4), die in besagter unterer Platte sitzen (3a) und mit besagter Kammer (2a, 2b) in Verbindung stehen; und
einer Dosiervorrichtung (5), die so konfiguriert und angeordnet ist, um Sauce (S) aus einem Saucentank (6) zu beziehen und Sauce (S) in sukzessiven Dosen der Kammer zuzuführen, wobei die Sauce durch besagte Düsen (4) ausgestoßen und auf sukzessive Pizzaböden oder Lebensmittel (P) aufgebracht wird,
einer Trennplatte (7), die so angeordnet ist, um besagte Kammer (2a, 2b) in einen oberen Kammerbereich (2a) und einen unteren Kammerbereich (2b) zu unterteilen, die über eine Vielzahl von Durchlassöffnungen (8) in der Trennplatte (7) miteinander in Verbindung stehen, wobei besagte Dosiervorrichtung (5) so angeordnet ist, um Sauce (S) dem besagten oberen Kammerbereich (2a) zuzumessen,
Betätigungsvorrichtungen, die so konfiguriert und angeordnet sind, um eine Hin- und Herbewegung der besagten Trennplatte (7) im Verhältnis zum Gehäuse (3) oder umgekehrt herbeizuführen, und zwar zwischen einer ersten relativen Position, an dem der obere Kammerbereich (2a) ein vergrößertes Volumen und besagter unterer Kammerbereich (2b) ein verkleinertes Volumen hat, und einer zweiten relativen Position, an dem der obere Kammerbereich (2a) ein verkleinertes Volumen und der untere Kammerbereich (2b) ein vergrößertes Volumen hat, so dass die relativen Bewegungen zwischen der Trennplatte (7) und dem Gehäuse der Kammer (2a, 2b) eine alternierende Saucenpumpenwirkung in entgegengesetzten Richtungen zwischen dem oberen und unteren Kammerbereich über die Durchlassöffnungen (8) in besagter Trennplatte zur Folge haben,
und worin jede der genannten Gruppen von Saucenverteilerdüsen (4) sich zusammensetzt aus:
einem Rohrelement (9) mit innerem Kanal (9c); besagtes Rohrelement (9) besitzt:
einen oberen Abschnitt (9b) mit einem geschlossenen Ende, das an der Trennplatte (7) angebracht ist;
einen unteren Abschnitt (9a), der in eine entsprechende Durchlassöffnung (10) in der unteren Platte (3a) des Gehäuses (3) geschoben wird;
einen Auslass (11a) von besagtem inneren Kanal (9c) am Ende von besagtem unteren Abschnitt (9a); und
mindestens einen Einlass (11 b) zum inneren Kanal (9c), der so angeordnet ist, um in Verbindung mit dem unteren Kammerbereich (2b) als Folge der besagten relativen Hin- und Herbewegung zwischen der Trennplatte (7), an dem besagte Verteilerdüsen (4) angebracht sind, und dem Gehäuse (3), alternierend geschlossen und geöffnet werden zu können.

2. Vorrichtung gemäß Anspruch 1, die **dadurch gekennzeichnet ist, dass** besagter Einlass (11b) des Rohrelements (9) eine seitliche Öffnung darstellt, die so angeordnet ist, um durch eine Wand der Durchlassöffnung (10) alternierend geschlossen werden zu können, wenn das Gehäuse (3) und die Trennplatte (7) sich in besagter erster relativer Position befinden, und um in Verbindung mit dem unteren Kammerbereich (2b) geöffnet werden zu können, wenn sich das Gehäuse (3) und die Trennplatte (7) in besagter zweiter relativer Position befinden.

3. Automatische Vorrichtung zum Aufbringen von Soße auf Pizzaböden oder Lebensmitteln, bestehend aus:
mindestens einem Verteilerkopf (1), bestehend aus einem Gehäuse (3), das eine Kammer (2a, 2b) für Sauce (S) bildet, wobei besagtes Gehäuse (3) eine untere Platte (3a) besitzt, die einem Pizzaboden oder Lebensmitteln (P) gegenüberliegend eingestellt werden kann, sowie einer Gruppe von Verteilerdüsen (4), die in besagter unterer Platte sitzen (3a) und mit besagter Kammer (2a, 2b) in Verbindung stehen; und
einer Dosiervorrichtung (5), die so konfiguriert und angeordnet ist, um Sauce (S) aus einem Saucentank (6) zu beziehen und Sauce (S) in sukzessiven Dosen der Kammer zuzuführen, wobei die Sauce durch besagte Düsen (4) ausgestoßen und auf sukzessive Pizzaböden oder Lebensmittel (P) aufgebracht wird,
einer Trennplatte (7), die so angeordnet ist, um besagte Kammer (2a, 2b) in einen oberen Kammerbereich (2a) und einen unteren Kammerbereich (2b) zu unterteilen, die über eine Vielzahl von Durchlassöffnungen (8) in der Trennplatte (7) miteinander in Verbindung stehen, wobei besagte Dosiervorrichtung (5) so angeordnet ist, um Sauce (S) dem besagten oberen Kammerbereich (2a) zuzumessen,
Betätigungsvorrichtungen, die so konfiguriert und angeordnet sind, um eine Hin- und Herbewegung der besagten Trennplatte (7) im Verhältnis zum Gehäuse (3) oder umgekehrt herbeizuführen, und zwar zwischen einer ersten relativen Position, an dem der obere Kammerbereich (2a) ein vergrößertes Volumen und besagter unterer Kammerbereich (2b) ein verkleinertes Volumen hat, und einer zweiten relativen Position, an dem der obere Kammerbereich (2a) ein verkleinertes Volumen und der untere Kammerbereich (2b) ein vergrößertes Volumen hat, so dass die relativen Bewegungen zwischen der Trennplatte (7) und dem Gehäuse der Kammer (2a, 2b) eine alternierende Saucenpumpenwirkung in entgegengesetzten Richtungen zwischen dem oberen und unteren Kammerbereich über die Durchlassöffnungen (8) in besagter Trennplatte zur Folge haben,
und worin jede der genannten Gruppen von Saucenverteilerdüsen (4) sich zusammensetzt aus:
einem Rohrelement (9) mit innerem Kanal (9c); besagtes Rohrelement (9) besitzt:
einen unteren Abschnitt (9a), der eingeführt und an einer entsprechenden Durchlassöffnung (10) in der unteren Platte (3a) des Gehäuses (3) befestigt wird;
einen Auslass (11a) von besagtem inneren Kanal (9c) am Ende von besagtem unteren Abschnitt (9a);
einen oberen Abschnitt (9b), der über eine Durchlassöffnung (18) in der Trennplatte (7) hineingeschoben wird, und
mindestens einen Einlass (11 b) zum inneren Kanal (9c), der so angeordnet ist, um in Verbindung mit dem unteren Kammerbereich (2b) als Folge der besagten relativen Hin- und Herbewegung zwischen der Trennplatte (7) und dem Gehäuse (3) alternierend geschlossen und geöffnet werden zu können.
besagten Einlass (11 b) des Rohrelements (9), der eine seitliche Öffnung darstellt und neben einem geschlossenen Ende von besagtem oberen Bereich (9b) so angeordnet ist, um durch eine Wand der besagten Durchlassöffnung (18) in der Trennplatte (7) alternierend geschlossen werden zu können, wenn das Gehäuse (3) und die Trennplatte (7) sich in besagter erster relativer Position befinden, und um in Verbindung mit dem unteren Kammerbereich (2b) geöffnet werden zu können, wenn sich das Gehäuse (3) und die Trennplatte (7) in besagter zweiter relativer Position befinden.

4. Vorrichtung gemäß Anspruch 2 oder 3, die **dadurch gekennzeichnet ist, dass** die elektronische Steuermittel mit der Dosiervorrichtung (5) und besagter Betätigungsvorrichtung in Verbindung stehen, um die Einspeisung jeder Saucendosis (S) in den oberen Kammerbereich (2a) durchzuführen, während der Einlass (11 b) des Rohrelements (9) mindestens teilweise geöffnet ist.

5. Vorrichtung gemäß Anspruch 4, die **dadurch gekennzeichnet ist, dass** die Position des Einlasses (11b) im Verhältnis zu einem Anschluss von besagter Durchlassöffnung (10) in der unteren Platte (3a) oder besagter Durchlassöffnung (18) in der Trennplatte (7) dergestalt ist, dass während des Übergangs von der ersten relativen Position zur zweiten relativen Position und während der Einspritzung der nächsten Saucendosis im inneren Kanal (9c) des Rohrelements (9) durch besagten Einlass (11 b) eine Saugwirkung erzeugt wird.

6. Vorrichtung gemäß Anspruch 4, die **dadurch gekennzeichnet ist, dass** besagte elektronische Steuereinrichtungen so ausgelegt sind, um während der relativen Bewegung zwischen Gehäuse (3) und Trennplatte (7) von der ersten relativen Position in die zweite relative Position die Einspritzung jeder Saucendosis (S) in den oberen Kammerbereich (2a) durchzuführen.

7. Vorrichtung gemäß Anspruch 4, die **dadurch gekennzeichnet ist, dass** die untere Platte (3a) des Gehäuses (3) über der Bewegungsbahn einer Reihe von Pizzaböden oder Lebensmitteln (P) positioniert ist, die von einer Fördereinrichtung (13) kontinuierlich vorwärts transportiert werden, und das besagte elektronische Steuermittel auch mit besagter Fördereinrichtung (13) verbunden sind, um sukzessive Saucendosen (S) in Form von mehreren ausgestoßenen Portionen (S1) aus besagtem Verteilerkopf (1) mit geeignetem zeitlichen Vorsprung aufzubringen, damit jede Dosis der Sauce an einer festgelegten Stelle auf die Pizzaböden oder die Lebensmittel (P) fällt.

8. Vorrichtung gemäß Anspruch 4, die **dadurch gekennzeichnet ist, dass** die untere Platte (3a) des Gehäuses (3) über der Bewegungsbahn einer Reihe von Pizzaböden oder Lebensmitteln (P) positioniert ist, die mit Unterbrechungen von einer Fördereinrichtung (13) vorwärts transportiert werden, und das besagte elektronische Steuermittel auch mit besagter Fördereinrichtung (13) verbunden sind, um sukzessive Saucendosen (S) in Form von mehreren ausgestoßenen Portionen (S1) aus besagtem Verteilerkopf (1) in Übereinstimmung mit den Stopps der Fördereinrichtung (13) aufzubringen, damit jede Dosis der Sauce an einer festgelegten Stelle auf die Pizzaböden oder die Lebensmittel (P) fällt.

9. Vorrichtung gemäß jeglicher vorangehender Ansprüche, die **dadurch gekennzeichnet ist, dass** eine Absaugvorrichtung (12) in Verbindung mit dem oberen Kammerbereich (2a) so angeordnet ist, um sämtliche in der Kammer (2a, 2b) befindliche Luft zu entfernen, wenn die Kammer (2a, 2b) erstmalig gefüllt oder diese Maßnahme als notwendig erachtet wird.

10. Vorrichtung gemäß jeglicher vorangehender Ansprüche, die **dadurch gekennzeichnet ist, dass** die Trennplatte (7) mit einem Träger (14) außerhalb der Kammer (2a, 2b) mithilfe von mindestens einer Stütze (14a) verbunden ist, die durch eine entsprechende Öffnung (15) im Gehäuse (3) hineingeschoben wird; darüber hinaus ist mindestens ein linearer Antrieb (16) mit seinen beweglichen Teilen jeweils mit dem Gehäuse (3) und besagter Stütze (14) verbunden, um die relative Hin- und Herbewegung zwischen der Trennplatte (7) und dem Gehäuse (3) zu erzeugen.

11. Vorrichtung gemäß Anspruch 10, die **dadurch gekennzeichnet ist, dass** der Träger (14) an einem Sockel (17) befestigt ist, so dass das Gehäuse (3) und die untere Platte (3a) sich in Bezug auf besagten Sockel (17) bewegen, während die Trennplatte (7) und die Rohrelemente (9) während der relativen Hin- und Herbewgung zwischen Trennplatte (7) und Gehäuse (3) unbeweglich bleiben.

12. Vorrichtung gemäß Anspruch 10, die **dadurch gekennzeichnet ist, dass** das Gehäuse (3) zusammen mit der unteren Platte (3a) am Sockel befestigt sind (17), so dass der Träger (14) zusammen mit der Trennplatte (7) und den Rohrelementen (9) sich in Bezug auf den Sockel (17) bewegen, während das Gehäuse (3) und die untere Platte (3a) während der relativen Hin- und Herbewgung zwischen Trennplatte (7) und Gehäuse (3) unbeweglich bleiben.

## Revendications

1. Appareil automatique pour déposer la sauce sur les bases de pizzas ou produits alimentaires, du type comprenant:
au moins une tête de distribution (1) comprenant un corps (3) définissant une chambre (2a, 2b) pour la sauce (S), ledit corps (3) ayant une plaque inférieure (3a) pouvant être placée face à une base de pizza ou à tout autre produit alimentaire (P) et diverses buses de distribution de la sauce (4) disposées sur ladite plaque inférieure (3a) et en contact avec ladite chambre (2a, 2b); et
un dispositif de dosage (5) configuré et installé pour réceptionner la sauce (S) provenant d'un réservoir de sauce (6) et d'injecter la sauce (S) par doses successives dans la chambre à travers lesdites buses (4) et déposées sur des bases de pizza ou produits alimentaires successifs (P),
un plateau diviseur (7) prévu pour diviser ladite chambre (2a, 2b) en région de chambre supérieure (2a) et en région de chambre inférieure (2b) communiquant par plusieurs trous (8) dans le plateau diviseur (7), ledit dispositif de dosage (5) étant configuré pour doser la sauce (S) dans ladite région de chambre supérieure (2a),
moyens d'actionnement configurés et installés pour générer un mouvement réciproque sur ledit plateau diviseur (7) relativement au corps (3), ou inversement, entre une première position relative, où la région de chambre supérieure (2a) présente un volume supérieur et où ladite chambre de région inférieure (2b) présente un volume inférieur, et une deuxième position relative, où la chambre de région supérieure (2a) présente un volume inférieur et où la région de chambre inférieure (2b) présente un volume supérieur, de telle façon que lesdits mouvements relatifs entre le plateau diviseur (7) et le corps de la chambre (2a, 2b) génèrent un effet de pompage de sauce en alternance dans les directions opposées entre les régions de chambre supérieure et de chambre inférieure, à travers les trous (8) formés dans ledit plateau diviseur,
et dans lesquels chacune des buses de distribution de sauce (4) comprend:
un élément tubulaire (9) avec un conduit intérieur (9c), ledit élément tubulaire (9) ayant:
une partie supérieure (9b) avec un embout refermé fixé au plateau diviseur (7);
une partie inférieure (9a) insérée de manière coulissante dans le trou correspondant (10) formé dans la plaque inférieure (3a) du corps (3);
une sortie (11a) à partir dudit conduit intérieur (9c) de l'embout de ladite partie inférieure (9a); et
au moins une entrée (11 b) vers le conduit intérieur (9c), placée de façon à se fermer et s'ouvrir de façon alternée en contact avec la région de chambre inférieure (2b) suite au dit mouvement d'actionnement réciproque entre le plateau diviseur (7) où sont fixées lesdites buses de distribution (4) et le corps (3).

2. Dispositif selon la revendication 1, **caractérisé par le fait que** ladite entrée (11 b) de l'élément tubulaire (9) possède une ouverture latérale de façon à être fermée alternativement par une paroi du trou (10) lorsque le corps (3) et le plateau diviseur (7) sont dans la première position relative et ouverts en contact avec la région de chambre inférieure (2b) où le corps (3) et le plateau diviseur (7) sont dans la deuxième position relative.

3. Appareil automatique pour déposer la sauce sur des bases de pizzas ou produits alimentaires, du type comprenant:
au moins une tête de distribution (1) comprenant un corps (3) définissant une chambre (2a, 2b) pour la sauce (S), ledit corps (3) ayant une plaque inférieure (3a) pouvant être placée face à la base de pizza ou à tout autre produit alimentaire (P) et diverses buses de distribution de la sauce (4) disposées sur ladite plaque inférieure (3a) et en contact avec ladite chambre (2a, 2b); et
un dispositif de dosage (5) configuré et installé pour réceptionner la sauce (S) provenant d'un réservoir de sauce (6) et d'injecter la sauce (S) par doses successives dans la chambre à travers lesdites buses (4) et déposées sur des bases de pizza ou produits alimentaires successifs (P),
un plateau diviseur (7) prévu pour diviser ladite chambre (2a, 2b) en région de chambre supérieure (2a) et en région de chambre inférieure (2b) communiquant par plusieurs trous (8) dans le plateau diviseur (7), ledit dispositif de dosage (5) étant configuré pour doser la sauce (S) dans ladite région de chambre supérieure (2a),
moyens d'actionnement configurés et installés pour générer un mouvement réciproque sur ledit plateau diviseur (7) relativement au corps (3), ou inversement, entre une première position relative, où la région de chambre supérieure (2a) présente un volume supérieur et où ladite chambre de région inférieure (2b) présente un volume inférieur, et une deuxième position relative, où la chambre de région supérieure (2a) présente un volume inférieur et où la région de chambre inférieure (2b) présente un volume supérieur, de telle façon que lesdits mouvements relatifs entre le plateau diviseur (7) et le corps de la chambre (2a, 2b) génèrent un effet de pompage de sauce en alternance dans les directions opposées entre les régions de chambre supérieure et de chambre inférieure, à travers les trous (8) formés dans ledit plateau diviseur,
et dans lesquels chacune des buses de distribution de sauce (4) comprend:
un élément tubulaire (9) avec un conduit intérieur (9c), ledit élément tubulaire (9) ayant:
une partie inférieure (9a) insérée et fixée au trou correspondant (10) formé dans la plaque inférieure (3a) du corps (3);
une sortie (11a) à partir dudit conduit intérieur (9c) à l'embout de ladite partie inférieure (9a);
une partie supérieure (9b) insérée de manière coulissante dans un trou (18) dans le plateau diviseur (7); et
au moins une entrée (11 b) vers le conduit intérieur (9c), placée de façon à se fermer et s'ouvrir de façon alternative en contact avec la région de chambre inférieure (2b) suite au dit mouvement d'actionnement réciproque entre le plateau diviseur (7) et le corps (3);
ladite entrée (11 b) de l'élément tubulaire (9) ayant une ouverture latérale à côté de l'embout borgne de ladite partie supérieure (9b) étant refermée alternativement par une paroi dudit trou (18) dans le plateau diviseur (7) lorsque le corps (3) et le plateau diviseur (7) sont dans ladite première position relative en contact avec la région de chambre inférieure (2b) lorsque le corps (3) et le plateau diviseur (7) sont dans ladite deuxième position relative.

4. Dispositif selon la revendication 2 ou 3, **caractérisé par** une télécommande électronique en contact avec l'appareil de dosage (5) et lesdits moyens d'actionnement pour générer l'injection de chaque dose de sauce (S) dans la région de chambre supérieure (2a) alors que l'entrée (11b) de l'élément tubulaire (9) est au moins partiellement ouverte.

5. Dispositif selon la revendication 4, **caractérisé par** la position de l'entrée (11 b) en contact avec un port dudit trou (10) dans la plaque inférieure (3a) ou ledit trou (18) dans le plateau diviseur (7) de telle façon que, pendant la transition de la première position relative à la deuxième position relative et pendant l'injection de la dose de sauce suivante, un effet d'aspiration est produit dans le conduit intérieur (9c) de l'élément tubulaire (9) à travers ladite entrée (11 b).

6. Dispositif selon la revendication 4, **caractérisé par le fait que** ladite télécommande électronique est conçue pour générer l'injection de chaque dose de sauce (S) dans la région de chambre supérieure (2a) pendant le mouvement relatif entre le corps (3) et le plateau diviseur (7) de la première position relative à la deuxième position relative.

7. Dispositif selon la revendication 4, **caractérisé par le fait que** la plaque inférieure (3a) du corps (3) est positionnée au-dessus de la trajectoire d'une ligne de bases de pizza ou produits alimentaires (P), qu'un convoyeur (13) fait avancer continuellement, et **par le fait que** ladite télécommande électronique est également en contact avec ledit convoyeur (13) pour distribuer des doses successives de sauce (S) sous forme de plusieurs portions injectées (S1) à partir de ladite tête de distribution (1) dans un délai suffisamment rapide, de façon à ce que chaque dose de sauce soit déposée sur les bases de pizza ou produits alimentaires (P) à un emplacement prédéterminé.

8. Dispositif selon la revendication 4, **caractérisé par le fait que** la plaque inférieure (3a) du corps (3) est positionnée au-dessus de la trajectoire d'une ligne de bases de pizza ou produits alimentaires (P), qu'un convoyeur (13) fait avancer continuellement, avec des arrêts intermittents, et **par le fait que** ladite télécommande électronique est également en contact avec ledit convoyeur (13) pour distribuer des doses successives de sauce (S) sous forme de plusieurs portions injectées (S1) à partir de ladite tête de distribution (1) de façon synchronisée avec les butées dudit appareil convoyeur (13), de façon à ce que chaque dose de sauce soit déposée sur les bases de pizza ou produits alimentaires (P) à un emplacement prédéterminé.

9. Dispositif, selon l'une des revendications précédentes, **caractérisé par le fait qu'**un appareil de vidange (12) est installé en contact avec la région de chambre supérieure (2a) pour purger tout l'air contenu dans la chambre (2a, 2b) au moment où la chambre (2a, 2b) est initialement remplie ou selon les besoins.

10. Dispositif, selon l'une des revendications précédentes, **caractérisé par le fait que** le plateau diviseur (7) est relié à un support (14) en dehors de la chambre (2a, 2b) à l'aide d'au moins une colonne (14a) insérée de façon coulissante dans l'ouverture correspondante (15) dans le corps (3), et qu'au moins un actionneur linéaire (16) est installé avec ses pièces mobiles respectivement raccordées au corps (3) et au dit support (14) de façon à générer ledit mouvement relatif réciproque entre le plateau diviseur (7) et le corps (3).

11. Dispositif selon la revendication 10, **caractérisé par le fait que** le support (14) est fixé à la structure de base (17) de façon à ce que le corps (3) et la plaque inférieure (3a) bougent en fonction de ladite structure de base (17) alors que le plateau diviseur (7) et les éléments tubulaires (9) restent fixes pendant le mouvement relatif réciproque entre le plateau diviseur (7) et le corps (3).

12. Dispositif selon la revendication 10, **caractérisé par le fait que** le corps (3) et la plaque inférieure (3a) sont fixés à la structure de base (17) de façon à ce que le support (14), le plateau diviseur (7) et les éléments tubulaires (9) bougent en fonction de ladite structure de base (17) alors que le corps (3) et la plaque inférieure (3a) restent fixes pendant le mouvement relatif réciproque entre le plateau diviseur (7) et le corps (3).
